# EUROPEAN PATENT SPECIFICATION

(11) **EP 3 839 847 B1**
(45) Date of publication and mention of the grant of the patent: **06.08.2025**
(21) Application number: 19217511.5
(22) Date of filing: 18.12.2019
(51) Int. Cl.: G06Q 50/40, G06Q 50/60

(54) **IMPROVED CONSIGNMENT UNIT LABEL READING METHOD AND APPARATUS**
VERBESSERTES VERFAHREN UND VORRICHTUNG ZUM LESEN VON ETIKETTEN EINER VERSANDEINHEIT
PROCÉDÉ ET APPAREIL DE LECTURE D'ÉTIQUETTES D'UNITÉ D'ENVOI AMÉLIORÉS

(43) Date of publication of application: 23.06.2021
(73) Proprietor: Deutsche Post AG, 53113 Bonn (DE)
(72) Inventor: Özyigit, Ali, 53177 Bonn (DE); Sal, Baris Cem, 53175 Bonn (DE); Rogers, Kent, Kellyville, NSW 2155 (AU)
(74) Representative: Cohausz & Florack

(56) References cited:
- EP-A2- 3 462 380

## Description

### FIELD OF THE DISCLOSURE

The invention relates in general to the field of logistics, in particular to methods, apparatuses, systems and computer programs enabling improved reading of labels of consignment units.

### BACKGROUND

With rising ecommerce, a number of consignment units that are shipped per time increases, and logistics providers are thus required to operate faster and more efficiently. Large numbers of orders have to be processed rapidly and efficiently demanding technological solutions that help improving reliability of automated and manual logistics and warehouse processes.

EP 3 462 380 A2 discloses a method in a logistics process including the steps of first generating a first image of a surface of a consignment unit, then linking this image with an identification number and storing the image and the identification number on a data processing unit.

### SUMMARY OF SOME EXAMPLE EMBODIMENTS OF THE INVENTION

Logistics and warehouse processes such as processes relating to shipping of consignment units or to inventories, consignment units (e.g. parcels, letters, or goods in general) need to be provided with respective labels bearing corresponding label information. Labels may bear label information in written form, in form of one or two dimensional optical codes (e.g. barcode, matrix code, QR-codes, etc.), or in form of electromagnetic, electric or magnetic type information (to be read by sensors of a read-out device based on electromagnetic signals, electric or magnetic fields, e.g. RFID and/or NFC sensors). Label information may generally correspond to information necessary or useful for identifying the consignment unit, its properties and/or requirements, its shipping source and/or its shipping destination. Label information may thus include for example identification information of the consignment unit, shipping information (e.g. sender information, recipient information), etc. As logistics processes usually include stages of storing consignment units in one or more warehouses, label information may comprise warehouse storage information, e.g. identifying a storing position of a consignment unit in a warehouse. Stages of logistics processes at which labels are read include for example packaging, storing, picking, packing, loading, sorting stages of the corresponding logistics process.

While such labels may allow efficient processing in logistics processes, problems may occur if labels are lost during a logistics process and/or become at least partially unrecognizable due to damage, wear, insufficient ink during a label generation process, etc. In such situations, labels may become fully or partially unrecognizable which may lead e.g. to lost consignment units and/or to wrong inventory calculations in warehouse processes and/or misjudgments when consignment units are manually or automatically picked for further processing. It turned out that in a typical warehouse situation, only about 90% of consignment unit labels can be successfully read, i.e. only in about 90% of cases can label information be successfully derived from respective labels.

It is inter alia an object of the invention to provide in particular methods, apparatuses, systems and computer programs improving a rate at which label information can at least partially successfully be derived from labels assigned to respective consignment units.

The object of the invention is achieved by the subject matter of the independent claims. Advantageous embodiments are disclosed by the dependent claims.

According to a first aspect of the invention, a method performed by at least one first apparatus is disclosed, the method comprising obtaining or causing obtaining label information associated with a label assigned to a consignment unit; obtaining or causing obtaining reference surface information representative of at least one characteristic of at least a part of a surface of the consignment unit and/or of at least part of a surface of the label, wherein obtaining the reference surface information comprises obtaining an image of the at least a part of the surface of the consignment unit and/or of at least a part of the surface of the label using a camera; the method further comprising associating or causing associating the label information with the reference surface information, wherein associating the label information with the reference surface information comprises storing or causing storing the label information in association with the reference surface information; the method further comprising obtaining or causing obtaining current surface information representative of at least one characteristic of at least a part of a surface of a consignment unit and/or of at least a part of a surface of a label assigned to the consignment unit from at least one external apparatus; and if the current surface information obtained from the at least one external apparatus corresponds at least in part to the reference surface information, providing or causing providing the label information associated with the reference surface information to be accessible by the at least one external apparatus.

The method according to the first aspect of the invention may for instance be performed by an apparatus or by a system that comprises a plurality of apparatuses. The apparatus or system may for instance form a part of a control apparatus for logistics processes, e.g. of a warehouse control apparatus. The apparatus may further form a part of a mobile device or a label assignment apparatus such as a franking machine.

According to a second aspect of the invention, a method performed by at least one second apparatus is disclosed, the method comprising obtaining or causing obtaining current surface information representative of at least one characteristic of at least a part of a surface of a consignment unit and/or of at least part of a surface of a label assigned to the consignment unit, wherein obtaining the current surface information comprises acquiring or causing acquiring an optical image of the at least a part of the surface of the consignment unit and/or of at least a part of a surface of the label; and obtaining or causing obtaining label information from at least one external apparatus based on the obtained current surface information, the label information being associated with the label.

The method according to the second aspect of the invention may for instance be performed by an apparatus or by a system that comprises a plurality of apparatuses. The apparatus or system may for instance correspond to or be comprised by a mobile device, an unmanned ground vehicle (UGV), in particular a robot and/or an unmanned aerial vehicle (UAV), in particular a drone. It is noted that as used herein, a robot is understood to be an example of a UGV, and that as used herein, a drone is understood to be an example of a UAV.

For all aspects of the invention presented above (referred to as the "respective aspect" below), the following is disclosed:
- A computer program according to the respective aspect of the invention, the computer program when executed by a processor causing an apparatus or system to perform or control the method according to the respective aspect of the invention.
- A computer readable storage medium according to the respective aspect of the invention, in which the computer program according to the respective aspect of the invention is stored. The computer readable storage medium could for example be a disk or a memory or the like. It may for instance be tangible and/or non-transitory. The computer program could be stored in the computer readable storage medium in the form of instructions encoding the computer-readable storage medium. The computer readable storage medium may be intended for taking part in the operation of a device, like an internal or external memory (e.g. a Read-Only Memory (ROM)) or hard disk of a computer, or be intended for distribution of the program, like an optical disc.
- An apparatus according to the respective aspect of the invention, which is configured to perform or comprises respective means for performing or controlling the method according to the respective aspect of the invention. The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit In general, the means may comprise for instance one or more processing means.
- An apparatus according to the respective aspect of the invention, comprising at least one processor and at least one memory including computer program code, the at least one memory and the computer program code configured to, with the at least one processor, cause an apparatus (e.g. the apparatus according to the respective aspect of the invention) at least to perform or control the method according to the respective aspect of the invention.
- A system according to the respective aspect of the invention, the system comprising a plurality of apparatuses and configured to perform or comprises respective means for performing or controlling the method according to the respective aspect of the invention.

The disclosed apparatus according to any aspect of the invention may be a module or a component for a device, for example a chip and/or processor. Alternatively, the disclosed apparatus according to any aspect of the invention may be a device, for instance a server or other electronic device. The disclosed apparatus according to any aspect of the invention may comprise only the disclosed components (e.g. means) or may further comprise one or more additional components.

Furthermore, according to an exemplary embodiment, a system is disclosed, the system comprising an apparatus or system according to the first aspect of the invention and an apparatus or system according to the second aspect of the invention.

In other words, a system is disclosed that may comprise:
at least one first apparatus configured for: obtaining or causing obtaining label information associated with a label assigned to a consignment unit; obtaining or causing obtaining reference surface information representative of at least one characteristic of at least a part of a surface of the consignment unit and/or of at least part of a surface of the label, wherein obtaining the reference surface information comprises obtaining an image of the at least a part of the surface of the consignment unit and/or of at least a part of the surface of the label using a camera; and
for associating or causing associating the label information with the reference surface information, wherein associating the label information with the reference surface information comprises storing or causing storing the label information in association with the reference surface information; the method further comprising obtaining or causing obtaining current surface information representative of at least one characteristic of at least a part of a surface of a consignment unit and/or of at least a part of a surface of a label assigned to the consignment unit from at least one external apparatus; and if the current surface information obtained from the at least one external apparatus corresponds at least in part to the reference surface information, providing or causing providing the label information associated with the reference surface information to be accessible by the at least one external apparatus; and
at least one second apparatus configured for:
   obtaining or causing obtaining current surface information representative of at least one characteristic of at least a part of a surface of the consignment unit and/or of at least part of a surface of the label assigned to the consignment unit, wherein obtaining the current surface information comprises acquiring or causing acquiring an optical image of the at least a part of the surface of the consignment unit and/or of at least a part of a surface of the label; and
   obtaining or causing obtaining the label information from at least one external apparatus, in particular from the at least one first apparatus, based on the obtained current surface information, the label information being associated with the label.

One or more of the features and/or embodiments disclosed in the following may further define the first and/or second aspect of the invention.

The method according to the first aspect is performed by the at least one first apparatus which in an exemplary embodiment corresponds to a control apparatus or system of warehouse processes and/or of logistics processes (and/or to one or more processors thereof). Warehouse and logistics processes may include for example inventory processes such as inventory update processes and processes related to shipment of consignment units in general.

The method according to the first aspect comprises obtaining (e.g. by the control apparatus) or causing obtaining (e.g. by the one or more processors of the control apparatus) label information associated with a label assigned to a consignment unit. In an exemplary embodiment, the consignment unit corresponds to a parcel and/or to a letter and in an exemplary embodiment, the label comprises label information including shipping information, e.g. sender information (including the sender address), and/or recipient information (including the recipient address), and/or delivery-related information (e.g. priority information, e.g. indicating whether the consignment unit shall be delivered with higher or lower priority); delivery-due information (e.g. indicating when the consignment unit shall be preferably delivered to the recipient or when the consignment unit shall be delivered to the recipient at the latest); storing information (e.g. pertaining to a temperature, humidity, and/or environmental gas/air composition required by the consignment unit); and/or fragility information (e.g. indicating if the consignment unit is fragile or otherwise susceptible to damage if not handled with caution).

In an exemplary embodiment, the label information being associated with the label is to be understood such that the label information is comprised by the label in form of written text (e.g. to be read by a corresponding apparatus via optical character recognition, OCR), and/or in form of a machine-readable, visual representation, such as in form of a one-dimensional barcode, and/or a two-dimensional matrix code, such as a QR code, and/or as information to be read-out by a read-out device based on electromagnetic signals, electric fields or magnetic fields. For instance, in the latter case, the label may be or may comprise a Radio Frequency Identification (RFID) or Near Field Communication (NFC) label holding available at least part of the label information to be read-out using an RFID sensor or an NFC sensor. Thus, in an exemplary embodiment, the label comprises a machine-readable visual representation of at least part of the label information and/or a Radio Frequency Identification (RFID) or Near Field Communication (NFC) label holding available at least part of the label information.

The label may be provided to the consignment unit for example at an initial stage of a logistics or warehouse process (the label is assigned to the consignment unit). An apparatus (e.g. a label assignment apparatus such as a franking machine) may print the label onto a surface of the consignment unit or may attach (e.g. glue) the label to the surface of the consignment unit and may at this stage provide corresponding label information to the at least one first apparatus, e.g. via a communication path. In an exemplary embodiment, the communication path may be a bus connection such as a Universal Serial Bus (USB) connection and/or a wireless or wired network connection. In an exemplary embodiment, the network connection is a 2G/3G/4G/5G cellular connection and/or a non-cellular network connection such as a LAN or WLAN connection. In other words, in an exemplary embodiment, obtaining or causing obtaining label information associated with a label assigned to a consignment unit comprises obtaining or causing obtaining the label information from a label assignment apparatus (e.g. a franking machine) or by a label assignment apparatus.

According to the first aspect, the method further comprises obtaining or causing obtaining reference surface information representative of at least one characteristic of at least a part of a surface of the consignment unit, and/or of at least a part of a surface of the label.

For example at the initial stage of the logistics or warehouse process, an optical image may be acquired of a surface of the consignment unit, which may or may not include the label or part of the label attached to the consignment unit To this end, a camera may be incorporated into the label assignment unit and/or the image may be acquired using a mobile device. The mobile device may e.g. be a mobile device (e.g. a smartphone or tablet computer) of a warehouse staff person and may be held in a suitable position using a holder attached to the label assignment apparatus. In this way, using such holder, on the one hand, the image can be taken at the same stage when also the label is assigned to the consignment unit, while on the other hand, reproducibility of an image taking position is ensured.

In an exemplary embodiment, surface information (reference surface information and/or current surface information) corresponds to or is information derived from the optical image. In an exemplary embodiment, the surface information represents a unique surface structure (fingerprint) of the consignment unit and/or of the label (and thus e.g. of the consignment unit material and/or of the label material). In addition or alternatively, in an exemplary embodiment, the surface information represents an image or pattern (e.g. a decorative or descriptive image or decorative or descriptive pattern) provided on the surface of the consignment unit and/or on the label. In the latter case, the image or pattern may be provided on a surface of the consignment unit e.g. for representing a product shipped with the consignment unit and/or a seller/shop sending the consignment unit Thus, in other words, in an exemplary embodiment, a characteristic of a surface of the consignment unit and/or of the label may correspond to a fingerprint of the surface (e.g. and thus of the corresponding packing material) and/or to an image or pattern (e.g. a decorative or descriptive image or decorative or descriptive pattern) provided on the surface.

As in case of the label information, also the reference surface information may be provided to the control apparatus. The reference surface information may be provided to the control apparatus from the label assignment apparatus or from the mobile device. For example, the label assignment apparatus may comprise a camera and may thus be configured to obtain the reference surface information. The label assignment apparatus may thus provide the label information and the reference surface information to the control apparatus.

In case the mobile device acquires the reference surface information, the label assignment apparatus may provide the label information to the control apparatus and the mobile device may provide the reference surface information to the control apparatus. Further, the mobile device may obtain the label information from the label assignment apparatus (via a communication path as described) or may obtain the label information by reading the label attached to the consignment unit and may then provide the label information and the reference surface information to the control apparatus. The label information and/or the reference surface information may be provided to the control apparatus using a communication path as described. Thus, in an exemplary embodiment, obtaining the label information and/or the reference surface information comprises receiving or causing receiving the label information and/or the reference surface information from at least one external apparatus.

It is noted that in an exemplary embodiment, the label information and/or the reference surface information is received from the at least one external apparatus via the communication path. As mentioned above, the method according to the first aspect comprises associating or causing associating the label information with the reference surface information. As described, the label information may be obtained at the at least one first apparatus from the external apparatus in association (e.g. in a same data transmission) or separately (e.g. in separate data transmissions). In other words, the external apparatus (e.g. the label assignment apparatus and/or the mobile device) may perform associating or causing associating the label information with the reference surface information in particular when sending the label information in association with the reference surface information to the control apparatus. Thus, the label assignment apparatus and/or the mobile device may be or may correspond to the at least one apparatus according to the first aspect (also referred to as at least one first apparatus herein).

In addition or alternatively, associating or causing associating the reference surface information with the label information may be performed at the control apparatus which thus may additionally or alternatively be or correspond to the at least one apparatus according to the first aspect. Regardless of whether or not the label information and the reference surface information are obtained at the control apparatus e.g. in a single or in plural data transmissions, the control apparatus may associate the label information and the reference surface information to be acquirable at a later stage of the logistics or warehouse process. To this end, these information elements may e.g. be stored in a dedicated storage space at the or connected to the control apparatus. Thus, in an exemplary embodiment, associating the label information with the reference surface information comprises storing or causing storing the label information in association with the reference surface information.

For example, the at least one first apparatus may correspond to or be comprised by the logistics and/or warehouse control apparatus or apparatus comprising or being connected with a server, a server system, a cloud or a cloud system, whereby associating the label information with the reference surface information may be understood to mean storing the reference surface information and the label information in association at the server/server system, cloud/cloud system.

By associating the label information with the reference surface information, it becomes possible to retrieve the label information e.g. from the logistics or warehouse control apparatus e.g. in case that a label provided on a consignment unit is damaged or lost. For example, if at a later stage of the logistics process, a person (e.g. a warehouse staff person) using a mobile device (an example of the second apparatus, this mobile device being the mobile device used for acquiring at least the reference surface information or being a different mobile device), a robot (a further example of the second apparatus), and/or a drone (a further example of the second apparatus) attempts to scan a label of a consignment unit to derive label information, and the attempt fails, the person, the robot or the drone may then scan (acquire an optical image of) the surface of the consignment unit and/or of at least part of the (potentially damaged) label and may provide the image as an example of current surface information and/or current surface information derived from the image to the control apparatus. Thus, in an exemplary embodiment, the method according to the first aspect further comprises obtaining or causing obtaining current surface information representative of at least one characteristic of at least a part of a surface of a consignment unit and/or of at least a part of a surface of a label assigned to the consignment unit from at least one external apparatus, in particular via the communication path.

The control apparatus may then determine whether or not reference surface information is stored at a storage device of or connected with the control apparatus that corresponds at least in part to the obtained current surface information. In other words, in this exemplary embodiment, the method according to the first aspect may further comprise relating or causing relating the current surface information to stored reference surface information to determine if the current surface information obtained from the at least one external apparatus corresponds at least in part to the reference surface information.

If reference surface information is found that corresponds at least in part with the obtained current surface information, the control apparatus may then provide label information that is associated with the reference surface information (e.g. that is stored in association with the reference surface information) to the mobile device, the robot or the drone. In other words, in this exemplary embodiment, the method according to the first aspect further comprises if the current surface information obtained from the at least one external apparatus corresponds at least in part to the reference surface information, providing or causing providing the label information associated with the reference surface information to be accessible by the at least one external apparatus, in particular via the communication path.

It was found that in this way, the success rate in retrieving label information could be increased from the mentioned 90% to up to 96% or more.

A mobile device, a robot and/or a drone that receives the label information from the control apparatus described above is an example of an apparatus according to the second aspect of the present invention (also referred to as at least one second apparatus herein). The apparatus according to the second aspect may in an exemplary embodiment thus correspond to a mobile device (configured at least for 3G, 4G, 5G cellular communications and/or for communications via a Wireless Local Area Network, WLAN), an Unmanned Ground Vehicle (UGV), in particular a robot, or an Unmanned Aerial Vehicle (UAV), in particular a drone. The mobile device may thus correspond to a smartphone, a tablet, a tablet computer, a notebook computer, an Internet-of-Things (IoT) device, etc., with dedicated program code stored thereon. In other words, in an exemplary embodiment the at least one second apparatus corresponds to or is comprised by (one or more processors comprised by) at least one of the following: a mobile device configured at least for 3G, 4G, 5G communications; a robot; an unmanned aerial vehicle, in particular a drone; and/or an Internet-of-Things (IoT) device.

The method according to the second aspect comprises obtaining or causing obtaining current surface information representative of at least one characteristic of at least a part of a surface of a consignment unit and/or of at least a part of a surface of a label assigned to the consignment unit.

Thus, as described above, for example at a later stage of a logistics process, e.g. when a consignment unit is to be stored in or transferred within a warehouse, or if an inventory process is performed, the second apparatus (e.g. a drone or a robot) or a staff person using the second apparatus (e.g. a mobile device) may attempt to obtain label information from a label of a consignment unit, e.g. may attempt to scan a barcode comprised by the label. In other words, in an exemplary embodiment, obtaining the label information comprises performing or causing performing an information acquisition process for deriving label information from the label.

An information acquisition process may comprise scanning a barcode, a matrix code and/or a QR code comprised by the label. The information acquisition process may in addition or alternatively comprise a text recognition (e.g. based on optical character recognition, OCR) and/or an image recognition process for deriving label information.

If the attempt fails as the label is e.g. damaged or lost, the at least one second apparatus may obtain current surface information. For example, the at least one second apparatus may acquire an image of a surface of the consignment unit and/or of at least part of the label. For example, the image may be acquired using a camera of a smartphone, of an UGV (e.g. of a robot) and/or of an UAV (e.g. of a drone). Thus, in an exemplary embodiment, obtaining the current surface information comprises acquiring or causing acquiring an optical image of the at least a part of the surface of the consignment unit and/or of at least a part of a surface of the label.

Surface information (current surface information) may then be provided in form of the acquired image to the at least one first apparatus. In other words, in an exemplary embodiment, obtaining the label information comprises providing or causing providing the current surface information to be accessible by the at least one external apparatus, in particular via the communication path.

It is noted that in this way, the at least one second apparatus may request transmission of the label information, e.g. from the at least one first apparatus. Alternatively or in addition, a separate request for label information may be transmitted from the at least one first apparatus to the at least one second apparatus. Further, such request (by providing the current surface information and/or by transmitting a dedicated request) may be sent from the at least one second apparatus to the at least one first apparatus regardless of whether or not a label is damage or not. Alternatively, such request may be transmitted once the at least one second apparatus has determined the label to be unreadable (e.g. by an unsuccessful attempt to read the label). Thus, in an exemplary embodiment, obtaining the label information comprises at least one of the following performing or causing performing an information acquisition process for deriving label information from the label; and if performing the information acquisition process fails at least partially: providing or causing providing the current surface information to be accessible by the at least one external apparatus, in particular via the communication path; and/or obtaining or causing obtaining the label information from the at least one external apparatus in particular via the communication path.

Thereby, in an exemplary embodiment, the label comprises a machine-readable optical label and/or a Radio Frequency Identification (RFID) or Near Field Communication (NFC) label, and wherein the information acquisition process comprises at least one of the following scanning or causing scanning at least the machine-readable optical label to obtain at least part of the label information; acquiring or causing acquiring an optical image of the label and obtaining or causing obtaining at least part of the label information from machine-readable text comprised by the label; and/or acquiring or causing acquiring at least part of label information from the Radio Frequency Identification, RFID, or Near Field Communication, NFC, label.

In an exemplary embodiment, surface information (current surface information and/or reference surface information) may be derived from an acquired image at the at least one first apparatus and/or at the at least one second apparatus. In the latter case, the derived surface information may then be provided from the at least one second apparatus to the at least one first apparatus in addition to or instead of the acquired image.

In an exemplary embodiment, surface information (current surface information and/or reference surface information) may be derived from an acquired image employing a surface information generating method (in an exemplary embodiment an algorithm configured for bijective mapping an image to a unique sequence of characters, e.g. letters and/or numbers) for mapping an acquired image to a unique sequence of characters. The surface information generating method may comprise at least two stages. In a first stage, the method determines whether or not a surface of the consignment unit and/or a label provided on the consignment unit is provided e.g. with one or more images and/or a pattern. To this end, the method may in an exemplary embodiment employ an image and/or pattern recognition process (e.g. an image and/or pattern recognition algorithm). Such image or pattern may correspond to a decorative image and/or pattern and/or may be employed to characterize one or more products shipped with the consignment unit and/or e.g. a shop from which the consignment unit is shipped. If such image or pattern can be recognized, the method converts the recognized image and/or pattern into a unique sequence of characters (letters and/or numbers). It is noted that converting an image of a surface into a unique sequence of characters may provide an advantage in that larger numbers of surfaces can be handled in a short time (as opposed to a case where images of a surface are used as surface information).

If no such image or decorative pattern is recognized, the method may proceed to a second stage in which a fingerprint of the surface/and or of the label is derived from the acquired image. In other words, in an exemplary embodiment, the deriving the current surface information from the acquired optical image comprises obtaining or causing obtaining a fingerprint as the characteristic of the at least a part of the surface of the consignment unit and/or of the at least a part of the surface of the label

In the context of the present disclosure, a fingerprint is to be understood as a unique, identifying pattern of a surface of a consignment unit and/or of a label suitable to unambiguously identify the consignment unit. For example, packing materials such as paper, cardboard, carton or further materials for packing goods usually have a certain unique random surface structure which is suitable to serve as fingerprint and to thus uniquely identify a corresponding consignment unit. The fingerprint derived from the acquired image may then similarly be converted into a unique sequence of characters.

A unique sequence of characters acquired in the first and/or second stage may correspond to a sequence of letters and/or numbers. Information representative of such sequence (e.g. a 128 bit representation) may then be provided as surface information. For example, in this way, information representative of such sequence may be used as reference surface information at the above described early stage of the logistics process or as current surface information at a later stage of the logistics process. In other words, in an exemplary embodiment, the current surface information and/or the reference surface information corresponds to information representative of a sequence of characters derived from an optical image of the at least a part of the surface of the consignment unit and/or of the at least part of the surface of the label.

Further, in an exemplary embodiment, in accordance with the method according to the first and/or second aspect, the at least one characteristic of the at least a part of the surface of the consignment unit and/or of the at least a part of the surface of the label comprises at least one of the following a fingerprint of at least part of the surface and/or at least part of an image, image pattern and/or text provided on the surface.

As disclosed above, e.g. using the surface information generating method, surface information may be derived from an image based on such at least one characteristic. It is noted that e.g. in case text is provided on a surface of the consignment unit in addition or alternatively to an image and/or pattern, in an exemplary embodiment, the deriving the current surface information from the acquired optical image comprises performing or causing performing a text recognition process for recognizing at least part of text provided on the surface.

In this embodiment, similarly as in case of an image and/or a pattern provided on the surface, e.g. using the surface information generating method, recognized text can be converted into a unique sequence of characters for identifying the consignment unit.

It is noted that while acquisition of an optical image is beneficial as e.g. existing cameras e.g. of smartphones may be employed in a convenient manner, (current or reference) surface information may be obtained using different means, e.g. using optical scanners or the like.

The method according to the second aspect further comprises obtaining or causing obtaining label information from at least one external apparatus based on the obtained current surface information, the label information being associated with the label.

For example, current surface information may be obtained by the at least one second apparatus in case an attempt of reading a label has failed in which case the at least one second apparatus provides the current surface information to be accessed by the at least one first apparatus. It is noted that instead of providing current surface information in form of a unique sequence of characters derived from the acquired image, e.g. using the described surface information generating method at the at least one second apparatus, the acquired image may be provided to the at least one first apparatus which may then e.g. derive the unique sequence of characters, e.g. employing the surface information generating method at the at least one first apparatus. Having obtained the current surface information, the at least one first apparatus determines reference surface information corresponding to the current surface information and provides label information associated with the reference surface information to be obtained by the at least one second apparatus.

As mentioned above, an optical image may be acquired using e.g. a camera of the at least one second apparatus such as a smartphone camera or a camera of a robot or a drone. In this exemplary embodiment, the method comprises at least one of the following deriving the current surface information from the acquired optical image; and/or providing or causing providing information representative of the acquired optical image to be accessible by at least one external apparatus, in particular via the communication path, for deriving current surface information from the information representative of the acquired optical image.

Thus, the current surface information may be derived from the optical image (e.g. using the surface information generating method) at the at least one second apparatus and/or at the external apparatus, e.g. the at least one first apparatus. If the current surface information is to be derived from the acquired image at the external apparatus, e.g. at the at least one first apparatus, information representative of the acquired image (e.g. image data in an appropriate format) can be transmitted to the external apparatus, e.g. to the at least one first apparatus, via the communication path. Further, the acquired image may be provided to the external apparatus, e.g. to the at least one first apparatus as current surface information in a suitable image format (e.g. image data, e.g. in TIF, JPG, PNG, GIF data format).

It is noted that in an exemplary embodiment of the first and/or the second aspect, a communication path as mentioned above is a direct or indirect communication path. For example, any communication path as mentioned above may comprise one or more hops, for example one or more communication links or communication connections. In an exemplary embodiment of the first and/or the second aspect, a communication path is to be understood as (bi-directional) wireless communication connection like a 2G/3G/4G/5G cellular wireless connection, a Device-to-Device (D2D) communication path, a (bi-directional) wireless communication connection such as a Wireless Local Area Network (WLAN) connection, or wired computer connection such as a bus, e.g. a Universal Serial Bus connection.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a block diagram of an exemplary embodiment of a system according to the invention;
- Fig. 2: is a block diagram of an exemplary embodiment of an apparatus according to the first aspect of the invention;
- Fig. 3: is a block diagram of an exemplary embodiment of an apparatus according to the second aspect of the invention;
- Fig. 4: is a flow chart illustrating an exemplary embodiment of a method according to the first aspect of the invention;
- Fig. 5: is a flow chart illustrating an exemplary embodiment of a method according to the second aspect of the invention; and
- Fig. 6: is a flow chart illustrating an exemplary embodiment of a method according to the invention.

### DETAILED DESCRIPTION OF EXAMPLE EMBODIMENTS OF THE INVENTION

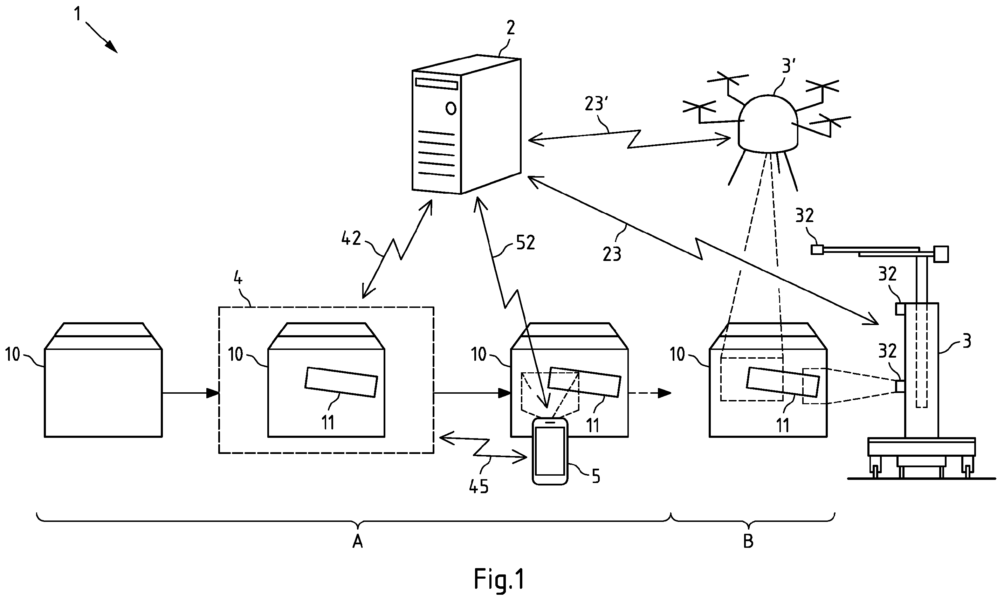

Fig. 1 is a schematic illustration of an example embodiment of a logistics system 1 according to the third aspect of the invention, comprising a control apparatus 2 (an example of the at least one first apparatus) according to the first aspect of the invention and two examples of the at least one second apparatus according to the second aspect of the invention. A first example of the at least one second apparatus is a robot 3 (an example of an unmanned ground vehicle, UGV) comprising three cameras 32 and/or optical sensors 32 for acquiring images and/or scanning label 11. A further example of the at least one second apparatus is a drone 3' comprising a camera (not depicted) for taking an image of label 11. Logistics system 1 further comprises a franking machine 4 (an example of a label assignment machine) and a mobile device 5 (an example of an external apparatus, for example a smartphone).

In the logistics system 1 of Fig. 1, at an exemplary stage A of a logistics process, a label 11 is assigned to a consignment unit 10 (e.g. containing goods ordered by a customer from an online shop). The label may include label information as machine-readable information in form of one or more machine-readable visual representations, e.g. one or more barcodes or one or more matrix codes, e.g. QR-codes and/or in form of text that may be machine-readable via optical character recognition, OCR. In this way, the label information may comprise consignment unit identification information, shipping information, e.g. sender information (including a sender address) and/or recipient information (including a recipient address) and/or delivery-related information. Delivery-related information may for example include priority information e.g. indicating whether the consignment shall be delivered with higher or lower priority; delivery-due information e.g. indicating when the consignment shall be preferably delivered to the recipient or when the consignment shall be delivered to the recipient at the latest The label information may further include storing information e.g. pertaining to a temperature, humidity and/or environmental gas/air composition required by the goods contained in the consignment unit; and/or fragility information e.g. indicating if the consignment is fragile or otherwise susceptible to damage if not handled with caution).

It is noted that in an exemplary embodiment, the label 11 is at least in part of electromagnetic, electric or magnetic type, and at least part of the label information may be read by a sensor of a read-out device based on electromagnetic signals, electric fields or magnetic fields. For instance, the label may be or comprise a Radio Frequency Identification (RFID) or Near Field Communication (NFC) label holding available label information to be read-out using an RFID sensor or an NFC sensor.

As shown in Fig. 1, label 11 is attached to (an exemplary embodiment of being assigned to) consignment unit 10 by franking machine 4. Alternatively, label 11 may be directly printed on (a further exemplary embodiment of being assigned to) consignment unit 10 e.g. inside of a corresponding franking machine.

Label information is thus generated at stage A when a corresponding label 11 is assigned to a respective consignment unit 10. As shown in Fig. 1, label information may be transmitted to the control apparatus 2 e.g. from franking machine 4 (an example of an external apparatus) via communication path 42. It is noted that label information may be first transmitted to mobile device 5 via communication path 45 to be transmitted from mobile device 5 to control apparatus 2 in association with reference surface information obtained at mobile device 5.

Further at stage A (before, after or simultaneously with attaching label 11 to consignment unit 10), an image is acquired of a surface of consignment unit 10 and/or of at least part of the label 11, in the shown case using a camera of mobile device 5. The optical image is then used to generate reference surface information, e.g. using a dedicated surface information generating method (e.g. implemented by a suitable algorithm). The surface information generating method may in a first step determine whether or not images and or patterns, e.g. for decorative purposes and/or for identification purposes are provided on a surface of the consignment unit and/or of at least part of the label 11 and may acquire a corresponding image and/or pattern if the determination is successful. In addition or alternatively (for example if the determination in the first step is not successful), the surface information generating method may in a second step acquire a fingerprint of the consignment unit surface. For example, as usual packing materials such as paper, cardboard have a unique random surface structure, part of such surface provides a unique identifying pattern, i.e. a fingerprint, which is suitable to uniquely identify a the corresponding consignment unit Based on an image or pattern acquired in the first step and/or a fingerprint acquired in the second step, the method (e.g. using the dedicated algorithm) may then derive e.g. a sequence of characters (letters and/or numbers) representative of the reference surface information. It is noted that surface information (reference surface information and/or current surface information) is to be understood as information represented by the image of the surface and/or the label and/or by information represented by information derived from the image.

Mobile device 5 may for example be a smartphone or tablet of a warehouse staff person and may be held by a holder attached to the franking machine 4 (not shown in the figure). Such holder may be advantageous in that it may allow for a mobile device to be placed into a correct and reproducible position and/or orientation for acquiring an image of a surface of one or more consignment units.

Having acquired the image, mobile device 5 transmits reference surface information to control apparatus 2 via communication path 52. To this end, mobile device 5 may transmit the information derived from the image acquired from the surface of the consignment unit 10 and/or the image to the control apparatus 2 for information to be derived by the control apparatus 2. In other words, the above described information generating method may be implemented as software at the mobile device 5 and/or at control apparatus 2. Thus, obtaining or causing obtaining reference surface information may be understood as obtaining or causing obtaining, at control apparatus 2 (an example of the at least one first apparatus), an image acquired of a surface of the consignment unit 10 and/or information derived from an image acquired of a surface of the consignment unit 10.

It is noted that mobile device 5 may transmit also the label information to control apparatus 2 via communication path 52, e.g. after having read label 11 and having derived the corresponding label information. In other words, control apparatus 2 may obtain label information from franking machine 4 via communication path 42 and/or from mobile device 5 via communication path 52. It is further noted that a camera for obtaining surface information may alternatively or in addition be incorporated also in franking machine 4. Thus, in addition to control apparatus 2, also each of the franking machine 4 and the mobile device 5 may represent the at least one apparatus according to the first aspect, as each of the franking machine 4 and the UGV 3 and/or the UAV 3' may be configured for obtaining label information associated with label 11 assigned to consignment unit 10; obtaining reference surface information representative of at least one characteristic of at least a part of a surface of the consignment unit 10 and/or of at least a part of a surface of the label 11; and associating or causing associating the label information with the reference surface information. The latter step may comprise e.g. associating the label information with the reference surface information for or when transmitting the label information and the reference surface information to the control apparatus 2.

Having thus obtained label information and reference surface information, control apparatus 2 may store the label information in association with the reference surface information to be available at a later stage (stage B in Fig. 1) of the logistics process if necessary.

A later stage B may for example be a stage of a logistics process where the consignment unit 10 is stored at or transferred within a warehouse by a person of warehouse staff, by UGV 3 and/or by UAV 3'. Alternatively or in addition, stage B may correspond to a stage of an inventory checking process, a cycle counting, or a different warehouse operating operation performed e.g. by a person of warehouse staff, by UGV 3 and/or by UAV 3'.

At such later stage B, label 11 may have to be read to acquire label information such as a consignment unit ID, position information of the consignment unit 10 (e.g. of a storage position in a warehouse), or the like. Problems may occur if e.g. during preceding stages of the logistics process, label 11 has been damage and has thus become unreadable (or is even lost). UGV 3 and/or UAV 3' (examples of the at least one second apparatus according to the second aspect) may for example first perform an information acquisition process for deriving label information from label 11. For example, UGV 3 and/or UAV 3' may attempt scanning a code such as a barcode or matrix code comprised by label 11 and/or may attempt reading text comprised by label 11 using optical character recognition. If performing the information acquisition process fails at least partially, UGV 3 and/or UAV 3' may obtain current surface information representative of at least one characteristic of at least a part of a surface of the consignment unit 10 and/or of at least a part of a surface of label 11. For example, UGV 3 and/or UAV 3' may, using for example a camera comprised by UAV 3' and/or one of cameras 32 comprised by UGV 3', acquire an optical image of a surface of consignment unit 10 for example including part of label 11. UGV 3 and/or UAV 3' may then transmit the current surface information to control apparatus 2 (an example of the at least one external apparatus in the second aspect) via communication path 23/23' shown in Fig. 1. As in case of stage A described above, UGV 3 and/or UAV 3' may transmit an image of the surface to control apparatus 2 for information to be derived at control apparatus 2 or may transmit information to control apparatus 2, the information being derived from the image using the surface information generating method at UGV 3 and/or UAV 3'.

Such transmission may itself constitute a request for label information to be send from control apparatus 2 to UGV 3 and/or UAV 3' or UGV 3/UAV 3' may transmit a separate request for label information before, after, or simultaneous with the current surface information to control apparatus 2. Based on the current surface information received from UGV 3 and/or UAV 3', control apparatus 2 then relates the current surface information to stored reference surface information received from mobile device 5 (and/or from franking machine 4) at stage A. In other words, control apparatus 2 then checks if reference surface information corresponding to the current surface information received from UGV 3 and/or UAV 3' exists in a corresponding database. If a match is found, e.g. if reference surface information received at stage A matches (at least to a predetermined extend) the current surface information received from UGV 3 and/or UAV 3', control apparatus 2 sends the label information associated with the reference surface information corresponding to the current surface information to UGV 3 and/or UAV 3'. In other words, based on the current surface information transmitted to the control apparatus 2, UGV 3 and/or UAV 3' then obtains label information from control apparatus 2 (an example of the at least one external apparatus of the second aspect), whereby this label information is associated with label 11.

In this way, the present invention provides a backup means that enables recovering label information in case labels have become damaged or lost As mentioned above, it was found that a success rate in reading labels e.g. during warehouse operations can in this way be improved from only 90% to up to 96% or more.

It is noted that any of communication paths 42, 52, 23/23' described above may be a direct or indirect communication path. For example, any of communication paths 42, 52, 23/23' may comprise one or more hops, for example one or more communication links or communication connections. In the context of the present disclosure communication paths are to be understood as (bi-directional) wireless communication connections like 2G/3G/4G/5G cellular wireless connections, Device-to-Device (D2D) communication paths, (bi-directional) wireless communication connections such as Wireless Local Area Network (WLAN) connections, or wired computer connections such as buses including in particular USB connections.

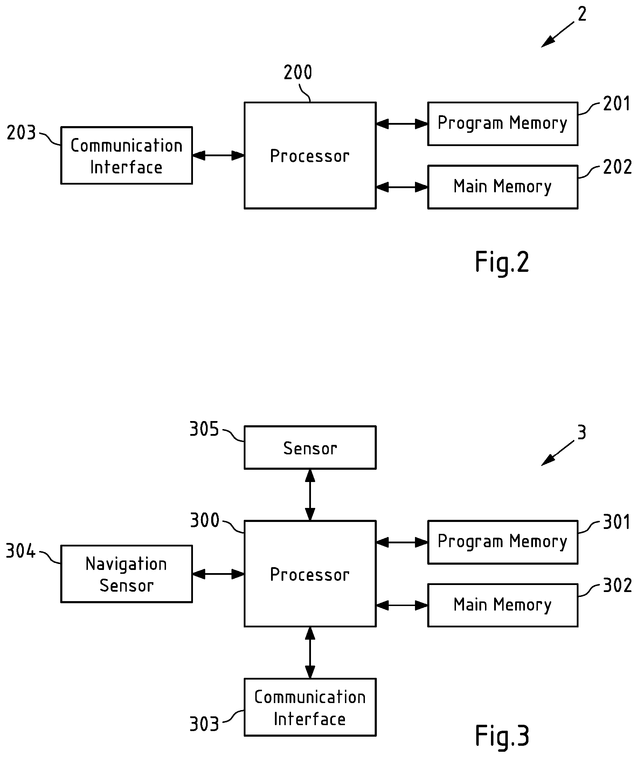

Fig. 2 is a block diagram of an exemplary embodiment of control apparatus 2 according to the invention. In the following, it is assumed that control apparatus 2 of system 1 of Fig. 1 corresponds to control apparatus 2 of Fig. 2.

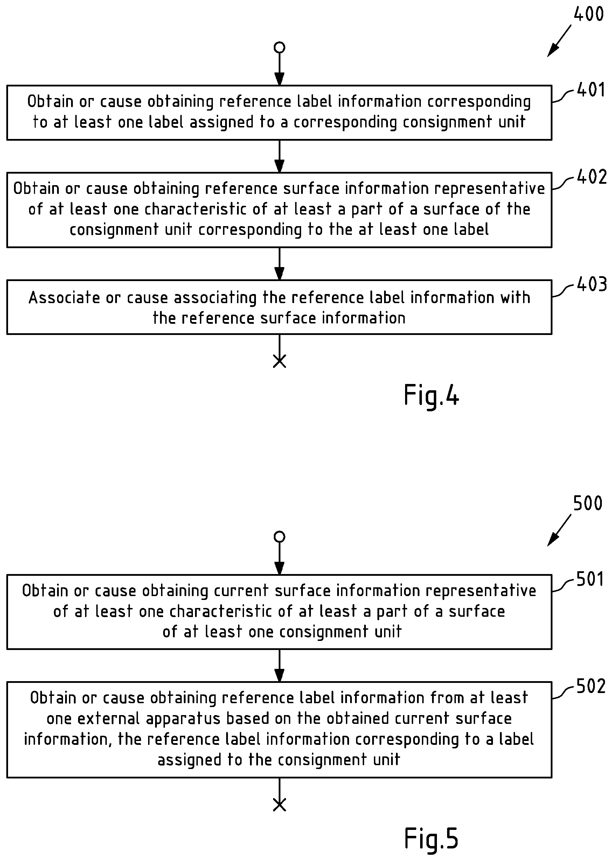

Control apparatus 2 comprises a processor 200. Processor 200 may represent a single processor or two or more processors, which are for instance at least partially coupled, for instance via a bus. Processor 200 executes a computer program code to perform any one embodiment of the disclosed method according to the first aspect (e.g. the steps of any one embodiment of the disclosed method) stored in program memory 201 or a part thereof (e.g. at least some steps of any one embodiment of the disclosed method) (as for instance further described below with reference to Fig. 4), and interfaces with a main memory 202. Accordingly, program memory 201 may contain an operating system for processor 200. Some or all of memories 201 and 202 may also be included into processor 200. One of or both of memories 201 and 202 may be fixedly connected to processor 200 or at least partially removable from processor 200, for example in the form of a memory card or stick.

Processor 200 further controls a communication interface 203 which is configured to communicate via a communication network. Control apparatus 2 may use communication interface 203 to communicate with external apparatuses such as franking machine 4 (via communication path 42), mobile device 5 (via communication path 52) and UGV 3/UAV 3' (via communication path 23/23') of system 1. In the following, it is assumed that communication interface 203 is a wireless or wired communication interface configured for communicating using (bi-directional) communication connections like 2G/3G/4G/5G cellular wireless connections, Device-to-Device (D2D) communication paths, (bi-directional) wireless communication connections such as Wireless Local Area Network (WLAN) connections, or wired computer connections such as buses including in particular USB connections. In an exemplary embodiment, communication interface 203 may be or may comprise a 2G/3G/4G/5G radio transceiver. For example, control apparatus 2 may use communication interface 203 to transmit stored label information to UGV 3 and/or UAV 3' of system 1 (e.g. via communication path 23/23') based on current surface information received from UGV 3 and/or UAV 3'.

The components 201 to 203 of control apparatus 2 may for example be connected with processor 200 by means of one or more serial and/or parallel busses.

It is to be understood that control apparatus 2 may comprise various other components like a user interface for receiving user input

Fig. 3 is a block diagram of an exemplary embodiment of UGV 3 (e.g. robot 3) being an example of the at least one apparatus according to the second aspect. It is noted that the following description of UGV 3 is representative of such at least one apparatus according to the second aspect which may likewise be embodied e.g. as an UAV (e.g. a drone) or as a mobile device e.g. used by a warehouse staff person performing warehouse operations. In the following, it is assumed that UGV 3 of Fig. 1 corresponds to UGV 3 of Fig. 3.

UGV 3 comprises a processor 300. Processor 300 may represent a single processor or two or more processors, which are for instance at least partially coupled, for instance via a bus. Processor 300 executes a computer program code stored in program memory 301 (e.g. computer program code causing UGV 3 to perform any one embodiment of the disclosed method according to the second aspect (e.g. the steps of any one embodiment of the disclosed method) or a part thereof (e.g. at least some steps of any one embodiment of the disclosed method) (as for instance further described below with reference to Fig. 5), when executed on processor 300), and interfaces with a main memory 302. Program memory 301 may also contain an operating system for processor 300 and further data. Some or all of memories 301 and 302 may also be included into processor 300. One of or both of memories 301 and 302 may be fixedly connected to processor 300 or at least partially removable from processor 300, for example in the form of a memory card or stick.

A program memory (e.g. program memory 201 and/or program memory 301) may for example be a non-volatile memory. The program memory (e.g. program memory 201 and/or program memory 301) may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 201 and/or main memory 301) may for example be a volatile memory. It may for example be a DRAM memory, to give non-limiting example. It may for instance be used as a working memory for a processor (e.g. processor 200 and/ or processor 300) when executing an operating system and/or programs.

Processor 300 further controls a wireless communication interface 303 configured for communicating via a cellular network (e.g. to transmit and receive cellular radio signals). For example, wireless communication interface 303 may be or may comprise a 2G/3G/4G/5G radio transceiver. UGV 3 may use wireless communication interface 303 to transmit reference surface information and/or current surface information and/or to receive label information. Moreover, processor 300 controls a navigation sensor 304 configured for receiving navigation signals. In particular in cases where the at least one apparatus according to the second aspect corresponds to or is comprised by a UGV (e.g. a robot) and/or a UAV (e.g. a drone), navigation signals may correspond to GNSS navigation signals and/or to navigation signals usable for indoor navigation such as WLAN signals. Based on such navigation signals, processor 300 may then be configured for controlling movements of UGV 3 (or of a UAV) e.g. within a warehouse while performing warehouse operations. To this end, navigation sensor 304 is configured for (e.g. periodically or repeatedly) scanning for observable navigation signals.

The components 301 to 304 of UGV 3 may for instance be connected with processor 300 by means of one or more serial and/or parallel busses.

It is to be understood that UGV 3 may comprise various other components like a user interface for receiving user input.

Fig. 4 is a flow chart 400 illustrating an exemplary embodiment of a method according to the first aspect of the invention. It is assumed in the following that control apparatus 2 as disclosed above with respect to Figs. 1 and 2 performs the steps of flow chart 400. It is noted that the steps of flow chart 400 could likewise be performed by franking machine 4 (if comprising a camera, or if connected with a mobile device having a camera) and/or by mobile device 5 as described above.

In a step 401, the control apparatus 2 obtains label information associated with a label assigned to a consignment unit. The control apparatus 2 may for example receive the label information from franking machine 4 via communication path 42 or from mobile device 5 via communication path 52.

In a step 402, the control apparatus 2 obtains reference surface information representative of at least one characteristic of at least a part of a surface of the consignment unit and/or of at least a part of a surface of the label. The control apparatus 2 may for example receive the reference surface information from mobile device 5 via communication path 52. As explained above, control apparatus 2 may obtain the reference surface information as an image of the surface and/or of at least part of label 11 of consignment unit 10. In this case, control apparatus 2 may derive information uniquely identifying the surface for example employing the surface information generating method disclosed above. Alternatively or in addition, control apparatus 2 may obtain the surface information as information uniquely identifying the surface in case mobile device 5 (or franking machine 4) derives the information from an acquired image using the surface information generating method.

In a step 405, control apparatus 2 associates the label information with the reference surface information. For example, control apparatus 2 may store the label information in association with the reference surface information such that the label information can be retrieved if necessary at a later stage of a logistics process, if current surface information is received which matches the reference surface information.

Fig. 5 is a flow chart 500 illustrating an exemplary embodiment of a method according to the second aspect of the invention. It is assumed in the following that UGV 3 as disclosed above with respect to Figs. 1 and 3 performs the steps of flow chart 500. The steps of flowchart 500 may in alternative embodiments be performed e.g. by a mobile device used by a warehouse staff person and/or by UAV 3'.

In a step 501, UGV 3 obtains current surface information representative of at least one characteristic of at least a part of a surface of a consignment unit and/or of at least a part of a surface of a label assigned to the consignment unit. As mentioned above, UGV 3 may for example acquire an image of the surface using a camera comprised by UGV 3 as current surface information and/or may derive information from the image using the above discussed surface information generating method as current surface information.

In a step 503, UGV 3 obtains label information from at least one external apparatus based on the obtained current surface information, the label information being associated with the label. As explained above, UGV 3 may send the current surface information obtained at step 501 for example to control apparatus 2 which may send label information back to UGV 3 if reference surface information is present in a database of control apparatus 2 that matches at least in part the current surface information.

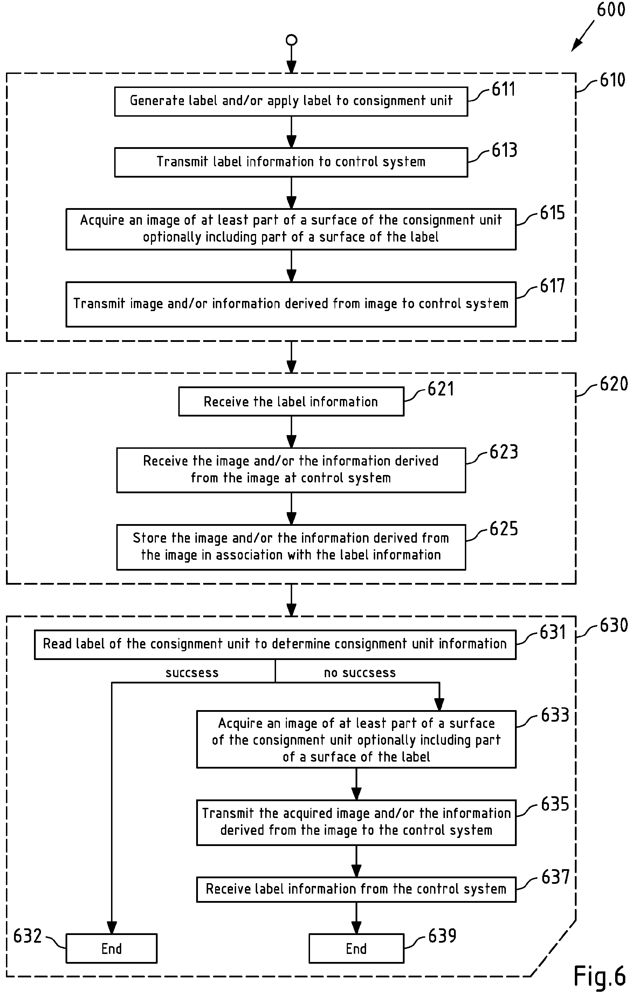

Fig. 6 is a flowchart 600 illustrating an example of a method according to an embodiment of the invention. It is assumed in the following that franking machine 4 and mobile device 5 as disclosed above with respect to system 1 of Fig. 1 perform steps of group 610. It is further assumed in the following that control apparatus 2 as disclosed above with respect to system 1 of Fig. 1 performs the steps of group 620. It is assumed in the following that UGV 3 as disclosed above with respect to system 1 of Fig. 1 performs the steps of group 630. It is to be understood that in particular the group of steps 630 could be performed by one or more different apparatuses, e.g. by mobile device 5, e.g. in case a warehouse staff person that has used mobile device 5 for acquiring the reference surface information of consignment unit 10 at an early stage of a logistics process (e.g. at stage A in Fig. 1) carries out a different process such as an inventory update process or the like at a later stage of the logistics process (e.g. at stage B in Fig. 1).

It is to be understood that any step of flowchart 600 may be performed by any one or more than one apparatus (e.g. one or more processors of mobile device 5, of control apparatus 2 and/or of UGV 3).

In step 611, franking machine 4 generates label 11 and/or applies label 11 to consignment unit 10. For example, a label may be generated and/or label information may be printed on the label which is then attached (e.g. glued) onto a surface of the consignment unit Similarly, a label may be printed directly onto a surface of the consignment unit. At this time, label information may be generated, e.g. label information including for example shipping information, e.g. sender information (including the sender address), and/or recipient information (including the recipient address), and/or delivery-related information (e.g. priority information, e.g. indicating whether the consignment unit shall be delivered with higher or lower priority; delivery-due information, e.g. indicating when the consignment unit shall be preferably delivered to the recipient or when the consignment unit shall be delivered to the recipient at the latest; storing information, e.g. pertaining to a temperature, humidity, and/or environmental gas/air composition required by the consignment unit; and/or fragility information, e.g. indicating if the consignment unit is fragile or otherwise susceptible to damage if not handled with caution).

Having generated the label (and thus being aware of the corresponding label information) the label information may then be transmitted from franking machine 4 (directly via communication path 42 or via mobile device 5 via communication path 52) to the control apparatus 2.

In step 613 mobile device 5 acquires an image of at least part of a surface of the consignment unit 10 optionally including part of a surface of the label 11. For example, the image may be an optical image acquired using a camera of a smartphone, of a tablet computer or of a laptop (the latter apparatuses being exemplary mobile devices). Alternatively or in addition, at step 613 franking machine 4 may acquire the image in case e.g. the franking machine 4 includes a camera. In step 613, mobile device 5 may optionally also acquire the label information by scanning label 11 applied to the surface of consignment unit 10.

In step 615, the image and/or information derived from the image is transmitted by the mobile device 5 (via communication path 52) and/or by the franking machine 4 (via communication path 42) to control apparatus 2. As explained above, either the mobile device 5 and/or the franking machine 4 may derive information from the acquired image and may convert this information into a character (letter and/or number) representation to be transmitted to the control apparatus 2 using e.g. the surface information generating method. Alternatively (or in addition) the image may be transmitted to the control apparatus 2 which then derives the information from the image at control apparatus 2. Mobile device 5 may optionally transmit also the label information to control apparatus 2 if acquired at step 613.

Thus, in step 621 of the group of steps 620 performed by control apparatus 2, the control apparatus 2 receives the label information and in step 623, the control apparatus 2 receives the image and/or the information derived from the image from mobile device 5 and/or from franking machine 4. It is noted that label information and reference surface information may be received by control apparatus 2 in association at different steps (the label information and the reference surface information being linked by corresponding information, e.g. by corresponding identifiers and/or data headers or the like) or may be received (e.g. from mobile device 5) in a single step, e.g. in a same information or data packet.

In step 625control apparatus 2 stores the image and/or the information derived from the image in association with the label information (performs an example of associating or causing associating the label information with the reference surface information).

It is noted that the steps of group 610 of steps and the steps of group 620 of steps may be performed at an initial or early stage of a logistics process (e.g. stage A in Fig. 1) while the steps of group 630 of steps may be performed at a different stage (e.g. stage B in Fig. 1), e.g. at an inventory update or counting process and/or when a consignment unit is stored or transferred within a warehouse. The steps of group 630 may thus be performed e.g. by a person and/or an UAV, e.g. by a robot and/or an UAV, e.g. by a drone, performing such warehouse operation.

Thus, in a step 631 for example UGV 3 reads label 11 of the consignment unit 10 to determine consignment unit information. For example, sensor 305 of UGV 3 (e.g. an optical camera and/or an optical scanner) may perform an information acquisition process to acquire the label information e.g. via bar code scanning (scanning of one dimensional barcodes or two dimensional matrix codes) and/or character recognition (e.g. OCR). Alternatively or in addition, if the label is of electromagnetic, electric or magnetic type, the information from the label may be read by sensor 305 based on electromagnetic signals, electric fields or magnetic fields. For instance, the label may be or comprise a Radio Frequency Identification (RFID) or Near Field Communication (NFC) label, and then, correspondingly, sensor 305 may be or comprise an RFID sensor or NFC sensor.

In case the information acquisition process performed in step 631 is successful, method 600 proceeds to step 632 and ends.

In case the information acquisition process is not successful, e.g. as a result of a missing or unreadable label 11, method 600 proceeds to step 633 and UGV 3 uses sensor 305 at step 633 to acquire an image of at least part of a surface of the consignment unit 10 optionally including part of a surface of the label 11 of the consignment unit 10. As explained above, information may be derived from the acquired image (e.g. a unique string of characters) to be transmitted to control apparatus 2 or such derivation may be performed at the control apparatus 2 based on the image. Thus, in step 635, UGV 3 transmits the acquired image and/or the information derived from the image to control apparatus 2 In other words, in step 635, UGV 3 transmits the current surface information to control apparatus 2. Control apparatus 2 then determines whether reference surface information is present in a database of control apparatus 2 that corresponds at least in part to the received current surface information. If such corresponding reference surface information is present in the database, the control apparatus 2 transmits label information stored in association with the reference label information back to UGV 3.

Accordingly at step 637, UGV 3 receives label information from the control apparatus 2 and method 600 ends at step 639.

The following example embodiments of the invention are also disclosed:

In the specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program) may also be used in a corresponding manner in an example embodiment of any other category. It should also be understood that presence of a feature in the presented example embodiments shall not necessarily mean that this feature forms an essential feature of the invention and cannot be omitted or substituted.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method performed by at least one first apparatus, the method comprising:
- obtaining or causing obtaining label information associated with a label assigned to a consignment unit;
- obtaining or causing obtaining reference surface information representative of at least one characteristic of at least a part of a surface of the consignment unit and/or of at least a part of a surface of the label, wherein obtaining the reference surface information comprises obtaining an image of the at least a part of the surface of the consignment unit and/or of at least a part of the surface of the label using a camera;
- associating or causing associating the label information with the reference surface information, wherein associating the label information with the reference surface information comprises storing or causing storing the label information in association with the reference surface information;
- obtaining or causing obtaining current surface information representative of at least one characteristic of at least a part of a surface of a consignment unit and/or of at least a part of a surface of a label assigned to the consignment unit from at least one external apparatus;
- if the current surface information obtained from the at least one external apparatus corresponds at least in part to the reference surface information, providing or causing providing the label information associated with the reference surface information to be accessible by the at least one external apparatus.

2. The method according to claim 1, wherein obtaining the label information and/or the reference surface information comprises:
- receiving or causing receiving the label information and/or the reference surface information from at least one external apparatus.

3. A method performed by at least one second apparatus, the method comprising:
- obtaining or causing obtaining current surface information representative of at least one characteristic of at least a part of a surface of a consignment unit and/or of at least a part of a surface of a label assigned to the consignment unit, wherein obtaining the current surface information comprises acquiring or causing acquiring an optical image of the at least a part of the surface of the consignment unit and/or of at least a part of a surface of the label;
- obtaining or causing obtaining label information from at least one external apparatus based on the obtained current surface information, the label information being associated with the label.

4. The method according to claim 3, wherein obtaining the current surface information further comprises at least one of the following:
• deriving the current surface information from the acquired optical image;
• providing or causing providing information representative of the acquired optical image to be accessible by at least one external apparatus for deriving current surface information from the information representative of the acquired optical image.

5. The method according to any of the preceding claims, wherein the at least one characteristic of the at least a part of a surface of a consignment unit and/or of the at least a part of a surface of a label comprises at least one of the following:
• a fingerprint of at least part of the surface;
• at least part of an image, image pattern and/or text provided on the surface.

6. The method according to any of claims 4 or 5, wherein the deriving the current surface information from the acquired optical image comprises:
- performing or causing performing an image and/or text recognition process for recognizing at least part of an image, image pattern and/or text provided on the surface.

7. The method according to any of claims 3 to 6, further comprising:
- obtaining or causing obtaining a fingerprint as the characteristic of the at least a part of the surface of the consignment unit and/or of the at least a part of the surface of the label.

8. The method according to any of the preceding claims, wherein the current surface information and/or the reference surface information corresponds to information representative of a sequence of characters derived from an optical image of the at least a part of the surface of the consignment unit and/or of the at least part of the surface of the label.

9. The method according to any of the preceding claims 3 to 8, wherein obtaining the label information comprises:
- providing or causing providing the current surface information to be accessible by the at least one external apparatus.

10. The method according to any of the preceding claims 3 to 8, wherein obtaining the label information comprises at least one of the following:
- performing or causing performing an information acquisition process for deriving label information from the label; and
- if performing the information acquisition process fails at least partially:
- providing or causing providing the current surface information to be accessible by the at least one external apparatus;
- obtaining or causing obtaining the label information from the at least one external apparatus.

11. The method according to claim 10, wherein the label comprises a machine-readable optical label and/or a Radio Frequency Identification, RFID, or Near Field Communication, NFC, label, and wherein the information acquisition process comprises at least one of the following:
• scanning or causing scanning at least the machine-readable optical label to obtain at least part of the label information;
• acquiring or causing acquiring an optical image of the label and obtaining or causing obtaining at least part of the label information from machine-readable text comprised by the label;
• acquiring or causing acquiring at least part of label information from the Radio Frequency Identification, RFID, or Near Field Communication, NFC, label.

12. The method according to any of the preceding claims, wherein the label comprises a machine-readable visual representation of at least part of the label information and/or a Radio Frequency Identification (RFID) or Near Field Communication (NFC) label holding available at least part of the label information.

13. The method according to any of the preceding claims, wherein the at least one second apparatus is comprised by or corresponds to at least one of the following:
• a mobile device configured at least for 3G, 4G, 5G communications;
• an unmanned ground vehicle, in particular a robot;
• an unmanned aerial vehicle, in particular a drone;
• an Internet-of-Things (IoT) device.

14. A computer program, the computer program when executed by a processor causing an apparatus to perform and/or control a method according to any of the preceding claims.

15. An apparatus or a system comprising a plurality of apparatuses, the apparatus or system configured to perform and/or control or comprising respective means for performing and/or controlling a method according to any of claims 1 to 13.

## Patentansprüche

1. Ein Verfahren, das von zumindest einer ersten Vorrichtung durchgeführt wird, wobei das Verfahren umfasst:
- Erhalten oder Veranlassen des Erhaltens von Etiketteninformation, die mit einem einer Sendungseinheit zugeordneten Etikett assoziiert ist;
- Erhalten oder Veranlassen des Erhaltens von Referenzoberflächeninformation, die für zumindest ein Merkmal zumindest eines Teils einer Oberfläche der Sendungseinheit und/oder zumindest eines Teils einer Oberfläche des Etiketts repräsentativ ist, wobei das Erhalten der Referenzoberflächeninformation das Erhalten eines Bildes des zumindest einen Teils der Oberfläche der Sendungseinheit und/oder des zumindest einen Teils der Oberfläche des Etiketts unter Verwendung einer Kamera umfasst;
- Assoziieren oder Veranlassen des Assoziierens der Etiketteninformation mit der Referenzoberflächeninformation, wobei das Assoziieren der Etiketteninformation mit der Referenzoberflächeninformation Speichern oder Veranlassen des Speicherns der Etiketteninformation in Assoziierung mit der Referenzoberflächeninformation umfasst;
- Erhalten oder Veranlassen des Erhaltens von aktueller Oberflächeninformation, die für zumindest ein Merkmal zumindest eines Teils einer Oberfläche einer Sendungseinheit und/oder zumindest eines Teils einer Oberfläche eines der Sendungseinheit zugeordneten Etiketts repräsentativ ist, von zumindest einer externen Vorrichtung;
- wenn die von der zumindest einen externen Vorrichtung erhaltene aktuelle Oberflächeninformation zumindest teilweise der Referenzoberflächeninformation entspricht, Bereitstellen oder Veranlassen des Bereitstellens der mit der Referenzoberflächeninformation assoziierten Etiketteninformation, damit diese der zumindest einen externen Vorrichtung zugänglich ist.

2. Verfahren nach Anspruch 1, wobei das Erhalten der Etiketteninformation und/oder der Referenzoberflächeninformation aufweist:
- Empfangen oder Veranlassen des Empfangens der Etiketteninformation und/oder der Referenzoberflächeninformation von zumindest einer externen Vorrichtung.

3. Ein Verfahren, das von zumindest einer zweiten Vorrichtung durchgeführt wird, wobei das Verfahren umfasst:
- Erhalten oder Veranlassen des Erhaltens von aktueller Oberflächeninformation, die für zumindest ein Merkmal zumindest eines Teils einer Oberfläche einer Sendungseinheit und/oder zumindest eines Teils einer Oberfläche eines der Sendungseinheit zugeordneten Etiketts repräsentativ ist, wobei das Erhalten der aktuellen Oberflächeninformation Erhalten oder Veranlassen des Erhaltens eines optischen Bildes des zumindest einen Teils der Oberfläche der Sendungseinheit und/oder zumindest eines Teils einer Oberfläche des Etiketts umfasst;
- Erhalten oder Veranlassen von Etiketteninformation von zumindest einer externen Vorrichtung auf Grundlage der erhaltenen aktuellen Oberflächeninformation, wobei die Etiketteninformation mit dem Etikett assoziiert ist.

4. Verfahren nach Anspruch 3, wobei das Erhalten der aktuellen Oberflächeninformation weiterhin zumindest eines der folgenden umfasst:
• Ableiten der aktuellen Oberflächeninformation aus dem erfassten optischen Bild;
• Bereitstellen oder Veranlassen des Bereitstellens von Information, die für das erfasste optische Bild repräsentativ ist, so dass sie für zumindest eine externe Vorrichtung zugänglich ist, um aus der Information, die für das erfasste optische Bild repräsentativ ist, aktuelle Oberflächeninformation abzuleiten.

5. Verfahren nach einem der vorhergehenden Ansprüche, wobei das zumindest eine Merkmal des zumindest einen Teils einer Oberfläche einer Sendungseinheit und/oder des zumindest einen Teils einer Oberfläche eines Etiketts zumindest eines der folgenden umfasst:
• einen Fingerabdruck von zumindest einem Teil der Oberfläche;
• zumindest einen Teil eines Bildes, eines Bildmusters und/oder eines Textes, die auf der Oberfläche bereitgestellt werden.

6. Verfahren nach einem der Ansprüche 4 oder 5, wobei das Ableiten der aktuellen Oberflächeninformation aus dem erfassten optischen Bild umfasst:
- Durchführen oder Veranlassen der Durchführung eines Bild- und/oder Texterkennungsverfahrens zur Erkennung von zumindest einem auf der Oberfläche vorhandenen Teil eines Bildes, Bildmusters und/oder Textes.

7. Das Verfahren nach einem der Ansprüche 3 bis 6, ferner umfassend:
- Erhalten oder Veranlassen des Erhaltens eines Fingerabdrucks als Merkmal des zumindest einen Teils der Oberfläche der Sendungseinheit und/oder des zumindest einen Teils der Oberfläche des Etiketts.

8. Verfahren nach einem der vorhergehenden Ansprüche, wobei die aktuelle Oberflächeninformation und/oder die Referenzoberflächeninformation einer Information entspricht, die für eine Folge von Zeichen repräsentativ ist, die von einem optischen Bild des zumindest einen Teils der Oberfläche der Sendungseinheit und/oder des zumindest einen Teils der Oberfläche des Etiketts abgeleitet ist.

9. Verfahren nach einem der vorhergehenden Ansprüche 3 bis 8, wobei das Erhalten der Etiketteninformation umfasst:
- Bereitstellen oder Veranlassen des Bereitstellens der aktuellen Oberflächeninformation für den Zugriff durch die zumindest eine externe Vorrichtung.

10. Verfahren nach einem der vorangehenden Ansprüche 3 bis 8, wobei das Erhalten der Etiketteninformation zumindest eine der folgenden Angaben umfasst:
- Durchführen oder Veranlassen der Durchführung eines Informationserfassungsprozesses zur Ableitung von Etiketteninformation von dem Etikett; und
- wenn die Durchführung des Informationserfassungsprozesses zumindest teilweise fehlschlägt:
- Bereitstellen oder Veranlassen des Bereitstellens der aktuellen Oberflächeninformation für den Zugriff durch die zumindest eine externe Vorrichtung;
- Erhalten oder Veranlassen des Erhaltens der Etiketteninformation von der zumindest einen externen Vorrichtung.

11. Verfahren nach Anspruch 10, wobei das Etikett ein maschinenlesbares optisches Etikett und/oder ein Radio Frequency Identification (RFID)- oder Near Field Communication (NFC)-Etikett umfasst, und wobei der Informationserfassungsprozess zumindest eines der folgenden umfasst:
• Abtasten oder Veranlassen des Abtastens zumindest des maschinenlesbaren optischen Etiketts, um zumindest einen Teil der Etiketteninformationen zu erhalten;
• Erfassen oder Veranlassen des Erfassens eines optischen Bildes des Etiketts und Erhalten oder Veranlassen des Erhaltens von zumindest einem Teil der Etiketteninformationen aus maschinenlesbarem Text, der auf dem Etikett enthalten ist;
• Erfassen oder Veranlassen des Erfassens zumindest eines Teils der Etikettinformationen von dem Radio Frequency Identification (RFID)- oder Near Field Communication (NFC)-Etikett

12. Verfahren nach einem der vorhergehenden Ansprüche, wobei das Etikett eine maschinenlesbare visuelle Darstellung zumindest eines Teils der Etiketteninformationen und/oder ein Etikett für Radio Frequency Identification (RFID) oder Near Field Communication (NFC), das zumindest einen Teil der Etiketteninformationen bereithält, umfasst

13. Verfahren nach einem der vorhergehenden Ansprüche, wobei die zumindest eine zweite Vorrichtung von einer der folgenden umfasst ist, oder dieser entspricht:
• ein mobiles Gerät, das zumindest für 3G-, 4G-, 5G-Kommunikation konfiguriert ist;
• ein unbemanntes Bodenfahrzeug, insbesondere ein Roboter;
• ein unbemanntes Luftfahrzeug, insbesondere eine Drohne;
• ein Internet-of-Things (IoT)-Gerät

14. Computerprogramm, wobei das Computerprogramm, wenn es von einem Prozessor durchgeführt wird, eine Vorrichtung veranlasst, ein Verfahren nach einem der vorhergehenden Ansprüche durchzuführen und/oder zu steuern.

15. Vorrichtung oder System, das eine Mehrzahl von Vorrichtungen umfasst, wobei die Vorrichtung oder das System so eingerichtet ist, dass sie/es ein Verfahren nach einem der Ansprüche 1 bis 13 durchführt und/oder steuert oder entsprechende Mittel zur Durchführung und/oder Steuerung eines Verfahrens nach einem der Ansprüche 1 bis 13 umfasst

## Revendications

1. Méthode exécutée par au moins un premier appareil, comprenant :
- obtenir ou faire obtenir des informations d'étiquette associées à une étiquette attribuée à une unité d'expédition ;
- obtenir ou faire obtenir des informations de surface de référence représentatives d'au moins une caractéristique d'au moins une partie de la surface de l'unité d'expédition et/ou d'au moins une partie de la surface de l'étiquette, l'obtention des informations de surface de référence comprenant l'obtention d'une image d'au moins une partie de la surface de l'unité d'expédition et/ou d'au moins une partie de la surface de l'étiquette à l'aide d'une caméra ;
- associer ou faire associer les informations de l'étiquette aux informations de la surface de référence, l'association des informations de l'étiquette aux informations de la surface de référence comprenant stocker ou faire stocker les informations de l'étiquette en association avec les informations de la surface de référence ;
- obtenir ou faire obtenir des informations de la surface actuelle représentatives d'au moins une caractéristique d'au moins une partie de la surface d'une unité d'expédition et/ou d'au moins une partie de la surface d'une étiquette attribuée à l'unité d'expédition à partir d'au moins un appareil externe ;
- si les informations de la surface actuelle obtenues à partir d'au moins un appareil externe correspondent au moins en partie aux informations de la surface de référence, fournir ou faire fournir les informations de l'étiquette associées aux informations de la surface de référence pour qu'elles soient accessibles par au moins un appareil externe.

2. Méthode selon la revendication 1, dans laquelle l'obtention de l'information sur l'étiquette et/ou de l'information sur la surface de référence comprend :
- recevoir ou faire recevoir les informations relatives à l'étiquette et/ou à la surface de référence par au moins un appareil externe.

3. Méthode exécutée par au moins un deuxième appareil, la méthode comprenant:
- obtenir ou faire obtenir des informations sur la surface actuelle représentatives d'au moins une caractéristique d'au moins une partie de la surface d'une unité d'expédition et/ou d'au moins une partie de la surface d'une étiquette attribuée à l'unité d'expédition, l'obtention des informations sur la surface actuelle consistant à acquérir ou à faire acquérir une image optique de l'unité d'expédition ou d'une partie de la surface d'une étiquette attribuée à l'unité d'expédition au moins une partie de la surface de l'unité d'expédition et/ou au moins une partie d'une surface de l'étiquette ;
- obtenir ou faire obtenir des informations d'étiquette à partir d'au moins un appareil externe sur la base des informations sur la surface actuelle obtenues, les informations d'étiquette étant associées à l'étiquette.

4. Méthode selon la revendication 3, dans laquelle l'obtention de l'information sur la surface actuelle comprend en outre au moins l'un des éléments suivants :
- déduire l'information sur la surface actuelle à partir de l'image optique acquise ;
- rendre ou faire rendre accessibles des informations représentatives de l'image optique acquise à au moins un appareil externe pour en déduire des informations sur la surface actuelle à partir des informations représentatives de l'image optique acquise.

5. Méthode selon l'une des revendications précédentes, dans laquelle l'au moins une caractéristique de l'au moins une partie de la surface d'une unité d'expédition et/ou de l'au moins une partie de la surface d'une étiquette comprend au moins l'un des éléments suivants :
- une empreinte d'au moins une partie de la surface ;
- au moins une partie d'une image, d'un motif d'image et/ou d'un texte figurant sur la surface.

6. Méthode selon l'une des revendications 4 ou 5, dans laquelle la déduction de l'information de la surface actuelle à partir de l'image optique acquise comprend :
- exécuter ou faire exécuter un processus de reconnaissance d'image et/ou de texte pour reconnaître au moins une partie d'une image, d'un motif d'image et/ou d'un texte fourni sur la surface.

7. Méthode selon l'une des revendications 3 à 6, comprenant en outre :
- obtenir ou faire obtenir une empreinte en tant que caractéristique de l'au moins une partie de la surface de l'unité d'expédition et/ou de l'au moins une partie de la surface de l'étiquette.

8. Méthode selon l'une des revendications précédentes, dans laquelle l'information de la surface courante et/ou l'information de la surface de référence correspond à une information représentative d'une séquence de caractères déduite d'une image optique de l'au moins une partie de la surface de l'unité d'expédition et/ou de l'au moins une partie de la surface de l'étiquette.

9. Méthode selon l'une des revendications 3 à 8, dans laquelle l'obtention des informations d'étiquette comprend :
- fournir ou faire fournir l'information sur la surface actuelle pour qu'elle soit accessible par l'au moins un appareil externe.

10. Méthode selon l'une des revendications 3 à 8, dans laquelle l'obtention des informations d'étiquette comprend au moins l'une des étapes suivantes :
- exécuter ou faire exécuter un processus d'acquisition d'informations pour déduire les informations à partir de l'étiquette ; et
- si l'exécution du processus d'acquisition d'informations échoue au moins partiellement :
- fournir ou faire fournir les informations sur la surface actuelle pour qu'elles soient accessibles à l'au moins un appareil externe ;
- obtenir ou faire obtenir les informations relatives à l'étiquette à partir de l'au moins un appareil externe.

11. Méthode selon la revendication 10, dans laquelle l'étiquette comprend une étiquette optique lisible par machine et/ou une étiquette d'identification par radiofréquence (RFID) ou de communication en champ proche, NFC, et dans laquelle le processus d'acquisition d'informations comprend au moins une des étapes suivantes :
- scanner ou faire scanner au moins l'étiquette optique lisible par machine pour obtenir au moins une partie des informations de l'étiquette ;
- acquérir ou faire acquérir une image optique de l'étiquette et obtenir ou faire obtenir au moins une partie des informations de l'étiquette à partir de texte lisibles par machine compris sur l'étiquette ;
- acquérir ou faire acquérir au moins une partie des informations de l'étiquette provenant de l'identification par radiofréquence (RFID) ou de la communication en champ proche (NFC).

12. Méthode selon l'une des revendications précédentes, dans laquelle l'étiquette comprend une représentation visuelle lisible par machine d'au moins une partie des informations d'étiquette et/ou une étiquette d'identification par radiofréquence (RFID) ou de communication en champ proche (NFC) contenant au moins une partie des informations de l'étiquette.

13. Méthode selon l'une des revendications précédentes, dans laquelle l'au moins un deuxième appareil est compris dans ou correspond à au moins l'un des éléments suivants :
- un appareil mobile configuré au moins pour les communications 3G, 4G, 5G ;
- un véhicule terrestre sans pilote, en particulier un robot ;
- un véhicule aérien sans pilote, en particulier un drone ;
- un appareil de l'internet des objets (loT).

14. Programme d'ordinateur, le programme d'ordinateur, lorsqu'il est exécuté par un processeur, permettant à un appareil d'exécuter et/ou de contrôler une méthode selon l'une des revendications précédentes.

15. Appareil ou système comprenant plusieurs appareils, l'appareil ou le système étant configuré pour exécuter et/ou contrôler ou comprenant des moyens respectifs pour exécuter et/ou contrôler une méthode selon l'une des revendications 1 à 13.
